# EUROPÄISCHE PATENTANMELDUNG

(11) **EP 2 985 663 A1**
(43) Veröffentlichungstag der Anmeldung: **17.02.2016**
(21) Anmeldenummer: 14180907.9
(22) Anmeldetag: 14.08.2014
(51) Int. Cl.: G05B 19/05, G05B 19/418

(54) **Verfahren zur Simulation einer automatisierten industriellen Anlage**

(71) Anmelder: Siemens Aktiengesellschaft, 80333 München (DE)
(72) Erfinder: Drumm, Oliver, 76344 Eggenstein-Leopoldshafen (DE); Glaser, Martin, 76698 Ubstadt-Weiher (DE); Lutz, Benjamin, 76327 Pfinztal (DE); Wolf, Gerrit, 76187 Karlsruhe (DE)

(57) **Zusammenfassung**

Die Erfindung betrifft ein Verfahren zur Simulation einer automatisierten industriellen Anlage mit einer speicherprogrammierbaren Steuerung (11, 21, 30), in welcher ein Automatisierungsprogramm (33) und ein Simulationsprogramm (37) zur Simulation des Anlagenverhaltens anhand eines in der speicherprogrammierbaren Steuerung (11, 21, 30) hinterlegten Anlagenmodells oder Anlagenteilmodells (40) ablaufen. Prozesssignale, die beim realen Betrieb zur Übertragung über eine Prozessschnittstelle (13, 23, 32) zwischen Automatisierungsprogramm (33) und Anlage vorgesehen sind, werden bei der Simulation der automatisierten industriellen Anlage zwischen Automatisierungsprogramm (33) und Simulationsprogramm (37) übertragen. Dadurch kann der Aufwand, der bei bisherigen Simulationswerkzeugen für die Ankopplung an die Prozessschnittstelle (13, 23, 32) erforderlich war, nun vorteilhaft entfallen.

## Beschreibung

Die Erfindung betrifft ein Verfahren zur Simulation einer automatisierten industriellen Anlage mit einer speicherprogrammierbaren Steuerung, in welcher ein Automatisierungsprogramm abläuft, das zur Steuerung eines auf der Anlage ablaufenden Prozesses vorgesehen ist, gemäß dem Oberbegriff des Anspruchs 1. Weiterhin betrifft die Erfindung eine speicherprogrammierbare Steuerung und ein Simulationswerkzeug zur Durchführung des Verfahrens gemäß Anspruch 3 bzw. Anspruch 4.

Zur Automatisierung industrieller Anlagen, d. h. zur automatischen Steuerung und/oder Überwachung auf industriellen Anlagen ablaufender Prozesse, werden Automatisierungsgeräte eingesetzt. Spezielle Automatisierungsgeräte sind als sogenannte speicherprogrammierbare Steuerungen bekannt. Andere spezielle Automatisierungsgeräte werden beispielsweise als Leitsysteme bezeichnet, an welche mehrere speicherprogrammierbare Steuerungen angeschlossen sein können und die eine übergeordnete Steuerung für diese bilden. Speicherprogrammierbare Steuerungen unterscheiden sich von Standardcomputern, wie sie für Büroanwendungen eingesetzt werden, durch erweiterte Anschlussmöglichkeiten, eine reduzierte spezifische Funktionalität sowie ihre Eignung zum Einsatz in Industrieumgebungen. Die erweiterten Anschlussmöglichkeiten sind zur Realisierung einer Prozessschnittstelle erforderlich, durch welche Prozessperipherie mit der speicherprogrammierbaren Steuerung (SPS) verbunden werden kann, um Prozesssignale, beispielsweise Werte von Prozessvariablen wie Druck, Temperatur, Durchflussmenge, Füllstand, Dichte oder Gaskonzentration eines Mediums, welche durch Messumformer als Feldgeräte erfasst werden, aus der industriellen Anlage aufzunehmen und um weitere Prozesssignale entsprechend einer durch ein Automatisierungsprogramm vorgegebenen Strategie zur Steuerung des Prozesses auszugeben. Zur Steuerung kann beispielsweise mittels eines Regelventils als Stellglied eine Ventilstellung eingestellt werden, welche einem von einer speicherprogrammierbaren Steuerung als Prozesssignal ausgegebenen Sollwert entspricht.

Bei der Realisierung von Automatisierungsprojekten in der Prozessindustrie herrscht ein großer Kostendruck. Die Herausforderung besteht darin, die automatisierungstechnische Ausrüstung der industriellen Anlage in kürzest möglicher Zeit mit hoher Qualität zu planen, zu installieren und in Betrieb zu setzen. Dabei ist eine zumindest teilweise Simulation der automatisierten industriellen Anlage von Vorteil. Ein geeignetes Simulationswerkzeug "SIMIT: Simulation und virtuelle Inbetriebnahme" ist aus dem Katalog "Siemens ST PCS 7 T", April 2013, S. 4/2 bis 4/6 bekannt. Beispielsweise mit diesem Werkzeug durchgeführte Simulationen können für virtuelle Inbetriebnahmen, sogenannte Operator-Training-Systeme und andere Anwendungen eingesetzt werden. Das Simulationswerkzeug SIMIT ermöglicht den Test und die Inbetriebnahme einer speicherprogrammierbaren Steuerung an einer zumindest in Teilen virtuellen Anlage. Hierzu lässt sich das Verhalten der Prozessperipherie sowie der industriellen Anlage oder Teilanlage in SIMIT abbilden und in Echtzeit simulieren. Durch die Berechnung der Modelle in Echtzeit ist eine Ankopplung des Simulationswerkzeugs an eine reale speicherprogrammierbare Steuerung möglich, sodass ein sogenanntes HIL (Hardware In the Loop)-System aufgebaut werden kann. Vor allem beim Test eines in einer speicherprogrammierbaren Steuerung ablaufenden Automatisierungsprogramms, auch als Steuerungscode bezeichnet, ist wichtig, dass der erstellte Code nicht für die Simulation verändert werden muss, um ihn testen zu können. Zur Anschaltung des Simulationswerkzeugs SIMIT an die reale speicherprogrammierbare Steuerung wird die vorhandene Prozessschnittstelle der Steuerung genutzt. Übliche Prozessschnittstellen umfassen Schnittstellen für Feldbusse, beispielsweise PROFIBUS DP oder PROFINET IO, sowie I/O-Anschlüsse. Zur Anschaltung des Simulationswerkzeugs beispielsweise an eine Feldbusschnittstelle wird bisher ein Protokoll-Gateway eingesetzt, um das Protokoll der Schnittstelle des Simulationswerkzeugs auf das Protokoll des jeweiligen Feldbusses umzusetzen. Diese Art der Anschaltung ist aufwendig, da sie zum einen physikalisch in die Verbindung zwischen Simulationswerkzeug und Steuerung eingebaut werden muss, zum anderen eine Vielfalt von Feldbussen mit verschiedenen Protokollen existiert. Durch jede Anschaltung muss die jeweilige Kommunikationsfunktion exakt abgebildet werden. Zudem muss die Anschaltung sowohl funktional als auch zeitlich exakt arbeiten, um den Ablauf des Automatisierungsprogramms in der speicherprogrammierbaren Steuerung nicht zu beeinträchtigen. Eine Simulation des Anlagenverhaltens in Echtzeit bedeutet nämlich, dass eine simulierte Zeiteinheit, auch als Zeitscheibe bezeichnet, in ihrer Dauer einem Zyklus bei zyklischer Bearbeitung eines Automatisierungsprogramms entspricht. Die Realisierung mehrerer, zur Verbindung des Simulationswerkzeugs mit einer speicherprogrammierbaren Steuerung über die Prozessschnittstelle erforderlicher Anschaltungen ist daher mit hohem Aufwand verbunden.

Ein weiterer Nachteil des bekannten Simulationswerkzeugs kann darin gesehen werden, dass damit durchgeführte HIL-Tests fehleranfällig sind, da die Verknüpfung und Konfiguration der Prozessperipherie bei der Erstellung des Simulationsprogramms oft händisch durchgeführt und meist manuell geprüft werden muss. Bei beispielsweise mehreren tausend Messstellen ist dies entsprechend langwierig und eine häufige Fehlerquelle. Zudem sind die auf dem Simulationswerkzeug SIMIT vorgehaltenen Simulationsmodelle meist nach der Inbetriebnahme der Anlage von deren Weiterentwicklungen und Veränderungen entkoppelt. Der Arbeitsplan des Anlagenengineerings sieht nämlich meist eine entkoppelte Erstellung des Simulationsmodells der Anlage und der Anlagenautomatisierung vor, was dazu führen kann, dass das Simulationsmodell auf einem definierten Stand bleibt und eventuell an der Automatisierung oder der Anlage vorgenommene Änderungen nicht mitgeführt werden. Treten schwerwiegende Abweichungen zwischen den Systemen auf, kann dies den Einsatz des Simulationsmodells in einem HIL-Test unmöglich machen.

Der Erfindung liegt die Aufgabe zugrunde, ein Verfahren zur Simulation einer automatisierten industriellen Anlage zu finden, bei welchem eine Simulation des Anlagenverhaltens mit geringerem Aufwand mit Hilfe einer realen speicherprogrammierbaren Steuerung, in welcher ein Automatisierungsprogramm abläuft, durchführbar ist. Weitere Aufgaben bestehen darin, eine speicherprogrammierbare Steuerung bzw. ein Simulationswerkzeug zu schaffen, welche zur Durchführung des Simulationsverfahrens geeignet sind.

Zur Lösung dieser Aufgabe weist das neue Verfahren der eingangs genannten Art die in Anspruch 1 angegebenen Merkmale auf. In Anspruch 2 ist eine Weiterbildung der Erfindung, in Anspruch 3 eine speicherprogrammierbare Steuerung und in Anspruch 4 ein Simulationswerkzeug beschrieben.

Die Erfindung hat den Vorteil, dass zur Durchführung einer Simulation einer automatisierten industriellen Anlage mit einem Simulationswerkzeug zur Simulation des Anlagenverhaltens und mit einer realen speicherprogrammierbaren Steuerung, in welcher ein Automatisierungsprogramm abläuft, keine spezielle, an die Prozessschnittstelle der jeweils verwendeten Automatisierungsgeräte angepasste Anschaltung mehr erforderlich ist. Dadurch entfällt ein erheblicher, applikationsspezifischer Aufwand, der bisher bei der Erstellung einer Simulationsanordnung angefallen war. Insbesondere entfällt eine Vielzahl von verschiedenen Anschaltungen und Protokollumsetzern, die bisher für die verschiedenen Feldbustypen, z. B. PROFIBUS, PROFINET IO, Foundation Fieldbus (FF), DeviceNet, CANopen, Modbus, HART Communication oder EtherNet/IP erforderlich waren. Stattdessen läuft zur Simulation des Anlagenverhaltens in der speicherprogrammierbaren Steuerung ein Simulationsprogramm anhand eines ebenfalls in der Steuerung hinterlegten Anlagenmodells oder Teilmodells ab. Prozesssignale, die beim realen Betrieb zur Übertragung über die Prozessschnittstelle zwischen Automatisierungsprogramm und Anlage vorgesehen sind, werden bei der Simulation der automatisierten industriellen Anlage zwischen Automatisierungsprogramm und Simulationsprogramm übertragen. Als Prozesssignale werden in der vorliegenden Anmeldung zusammenfassend alle zwischen Anlage und Steuerung übertragenen Werte von Prozessvariablen bezeichnet, unabhängig davon, ob diese als Digitalwerte über eine Stichleitung oder über einen Feldbus oder als Analogsignale, beispielsweise mittels einer 4 bis 20 mA-Schnittstelle, im realen Betrieb über die Prozessschnittstelle übertragen werden.

Bei der Simulation werden, wie bereits oben beschrieben, diese Prozesssignale anstelle über die Prozessschnittstelle der speicherprogrammierbaren Steuerung nun über eine interne Schnittstelle zur Datenübertragung geleitet, welche im Simulationsbetrieb zwischen Automatisierungsprogramm und Simulationsprogramm aktiviert ist. Dazu kann in der speicherprogrammierbaren Steuerung eine Umschaltung des Signalflusses durchgeführt werden derart, dass die Prozesssignale, die beim realen Betrieb zur Übertragung zwischen realer Anlage und Automatisierungsprogramm, welches in der speicherprogrammierbaren Steuerung abläuft, über die Prozessschnittstelle der speicherprogrammierbaren Steuerung vorgesehen sind, bei der Simulation der automatisierten industriellen Anlage zwischen Automatisierungsprogramm und Simulationsprogramm über die in der speicherprogrammierbaren Steuerung befindliche interne Schnittstelle übertragen werden. Selbstverständlich ist es möglich, mittels dieser internen Schnittstelle weitere Daten, beispielsweise Parametrierdaten für virtuelle Feldgeräte, ergänzend zu den eigentlichen Prozesssignalen zu übertragen. Als besonders einfache Realisierung der beschriebenen Signalflussumschaltung oder ergänzend zu dieser ist es möglich, in der speicherprogrammierbaren Steuerung ein Prozessabbild zu führen, in welches den Prozesssignalen entsprechende Daten eingetragen werden. In diesem Fall kann die zwischen Automatisierungs- und Simulationsprogramm stattfindende Kommunikation als eine Synchronisation des in der speicherprogrammierbaren Steuerung gehaltenen Prozessabbilds nach Art eines Speicherbereichs mit gemeinsamem Zugriff für Automatisierungs- und Simulationsprogramm angesehen werden.

In einer besonders vorteilhaften Weiterbildung der Erfindung kann das Anlagenmodell oder Anlagenteilmodell dahingehend verbessert werden, dass Modelle integriert sind, durch welche Laufzeiten von Prozesssignalen über die Prozessschnittstelle abgebildet werden. Dadurch können beispielsweise Verzögerungen Berücksichtigung finden, die bei ihrer Übertragung über reale Feldbusse entstehen würden und spezifisch für den jeweiligen Feldbustyp sind. Ebenso kann die interne Verzögerung innerhalb der speicherprogrammierbaren Steuerung bei der Simulation durch entsprechende Modellierung berücksichtigt werden. Die Simulation einer automatisierten industriellen Anlage wird durch Berücksichtigung der Laufzeiten der Prozesssignale insbesondere dann verbessert, wenn sich die realen Laufzeiten bei einer Übertragung der Prozesssignale über die Prozessschnittstelle deutlich von den Laufzeiten bei der internen Kommunikation zwischen Automatisierungs- und Simulationsprogramm unterscheiden.

Wenn in einer Anlage zu deren Automatisierung mehrere speicherprogrammierbare Steuerungen verwendet werden, können mehrere Anlagenteilmodelle zur Modellierung der Anlage eingesetzt werden, wobei die auf verschiedenen Steuerungen vom jeweiligen Simulationsprogramm verwendeten Anlagenteilmodelle den im realen Betrieb durch die jeweilige Steuerung zu automatisierenden Anlagenteilen entsprechen. In einer besonders vorteilhaften Ausgestaltung der Erfindung umfassen das Anlagenmodell bzw. die Anlagenteilmodelle jeweils eine Verhaltensbeschreibung mit einem Laufzeitmodell und einem Ressourcenbedarf des Laufzeitmodells auf der jeweils verwendeten Steuerung. Dabei wird der Ressourcenbedarf durch zumindest eine Größenangabe des für das jeweilige Modell benötigten Speichers und eine Angabe der für den Ablauf einer Simulation anhand des jeweiligen Modells erforderlichen Zeit in einem Zyklus bei zyklischer Bearbeitung des Automatisierungsprogramms gekennzeichnet. Dadurch kann überprüft werden, ob auf der jeweiligen speicherprogrammierbaren Steuerung ausreichende Ressourcen für die zyklische Ausführung des Automatisierungsprogramms und des Simulationsprogramms vorhanden sind und ob eine Echtzeitsimulation bei ausreichend vorhandener Reserve realisierbar ist. Die Möglichkeit einer Integration zusätzlicher Programme auf einer Steuerung wird nämlich überwiegend durch die von der Steuerung bereitgestellten Ressourcen und die Bearbeitungszeit bestimmt, welche in der Steuerung für den Programmablauf in jedem Zyklus benötigt wird und die maximale Dauer eines Zyklus der zyklischen Bearbeitung nicht überschreiten darf. Ein zum Ablauf auf einer speicherprogrammierbaren Steuerung vorgesehenes Automatisierungsprogramm wird üblicherweise so konzipiert, dass sowohl bezüglich der zur Verfügung gestellten Ressourcen als auch bezüglich der Laufzeit eine gewisse Reserve auf der speicherprogrammierbaren Steuerung verbleibt, die für die Integration weiterer Funktionalität genutzt werden kann. In der Praxis ist diese Reserve nahezu in jeder Steuerung vorzufinden, um im Lebenszyklus einer Anlage weitere Automatisierungsfunktionalität auf der Steuerung integrieren zu können. Gemäß der vorliegenden Erfindung wird diese Reserve dazu genutzt, Simulationsprogramm und Modelle auf der Steuerung zu integrieren. Selbstverständlich muss die zuvor auf der speicherprogrammierbaren Steuerung vorhandene Reserve für die zusätzliche Bearbeitung des Simulationsprogramms ausreichend sein.

Das durch das Simulationsprogramm genutzte und im Speicher der jeweiligen speicherprogrammierbaren Steuerung hinterlegte Anlagenmodell oder Anlagenteilmodell ist unabhängig von eventuell im Automatisierungsprogramm vorhandenen Prozessmodellen, beispielsweise einem Modell einer Regelstrecke, welches in einem MPC (Model Predictive Controller) zur Verbesserung der Regelgüte dient. Die durch ein Simulationsprogramm genutzten Anlagenmodelle/Teilmodelle sind von Prozessmodellen eines Automatisierungsprogramms anhand der Ablaufzeit klar unterscheidbar. Erstere werden lediglich bei der Simulation einer automatisierten industriellen Anlage verwendet, während letztere beim realen Betrieb der Anlage und bei deren Simulation zum Einsatz kommen. Das Simulationsprogramm mit dem zugehörigen Anlagenmodell oder Anlagenteilmodell ist also ergänzend zu dem Automatisierungsprogramm und eventuell darin genutzten Prozessmodellen in einer speicherprogrammierbaren Steuerung vorhanden. Das Anlagenmodell oder Anlagenteilmodell kann daher auch als "koexistentes" Simulationsmodell bezeichnet werden.

Die Erfindung ist bevorzugt in Software implementiert. Sie ist damit einerseits auch ein Computerprogramm mit durch einem Computer ausführbaren Programmcodeanweisungen und andererseits ein Speichermedium mit einem derartigen Computerprogramm, also ein Computerprogrammprodukt mit Programmcodemitteln, sowie schließlich auch eine speicherprogrammierbare Steuerung oder ein Simulationswerkzeug, in deren Speicher als Mittel zur Durchführung des Verfahrens und seiner Ausgestaltungen ein solches Computerprogramm geladen oder ladbar ist.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Blockschaltbild einer automatisierten industriellen Anlage und
- Figur 2: eine speicherprogrammierbare Steuerung.

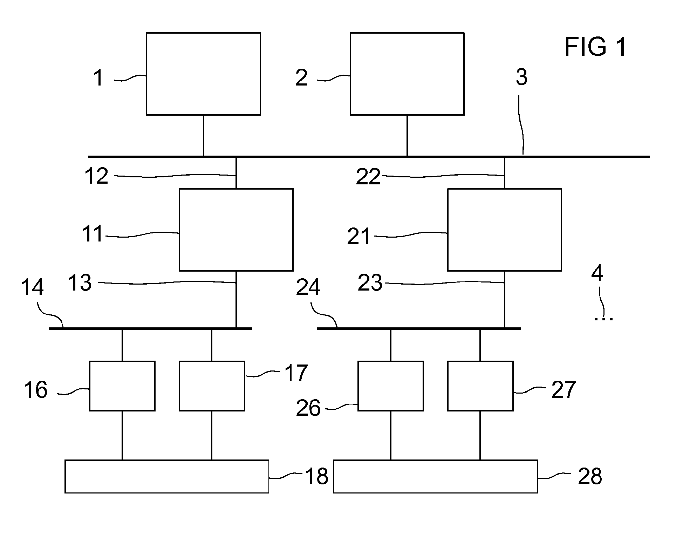

Zur Verdeutlichung der Erfindung ist in Figur 1 eine automatisierte industrielle Anlage mit einfachem Aufbau dargestellt. Ein Leitsystem 1 und zwei speicherprogrammierbare Steuerungen 11 und 21 sind durch jeweils eine Schnittstelle 12 bzw. 22 zur Datenübertragung miteinander verbunden. Bei den Schnittstellen 12 und 22 kann es sich beispielsweise um Schnittstellen handeln, die zum Anschluss an ein Profinet oder Industrial Ethernet 3 geeignet sind. Jede der beiden speicherprogrammierbaren Steuerungen 11 und 21 dient zur Automatisierung eines Teilbereichs einer industriellen Anlage.

Abweichend vom dargestellten Ausführungsbeispiel können selbstverständlich weitere speicherprogrammierbare Steuerungen entsprechend zu den speicherprogrammierbaren Steuerungen 11 und 21 zur Automatisierung einer größeren industriellen Anlage vorgesehen sein, wie es in Figur 1 durch drei Punkte 4 angedeutet ist. Ebenso kann abweichend vom gezeigten Ausführungsbeispiel bereits eine speicherprogrammierbare Steuerung zur Automatisierung einer kleineren industriellen Anlage genügen.

Im gezeigten Ausführungsbeispiel mit zwei speicherprogrammierbaren Steuerungen 11 und 21 haben diese zur Anschaltung an die industrielle Anlage eine Prozessschnittstelle 13 bzw. 23, über welche Prozesssignale im realen Betrieb der automatisierten industriellen Anlage übertragen werden. In Figur 1 sind der Übersichtlichkeit wegen lediglich zwei Feldbusse 14 und 24 an die Prozessschnittstellen 13 bzw. 23 angeschlossen. Über den Feldbus 14, beispielsweise Profibus, kommuniziert die speicherprogrammierbare Steuerung 11 beispielsweise mit einer dezentralen Peripherie 16 und einem Messumformer 17 als prozessnahe Komponenten, um einen auf der durch die speicherprogrammierbare Steuerung 11 automatisierten Teilanlage ablaufenden Prozess 18 einem Automatisierungsprogramm entsprechend zu steuern. In dazu analoger Weise kommuniziert die speicherprogrammierbare Steuerung 21 beispielsweise mit einer dezentralen Peripherie 26 und einem Messumformer 27 zur Steuerung eines Prozesses 28, welcher auf einem anderen Teilbereich der industriellen Anlage abläuft.

Es ist selbstverständlich, dass die Prozessschnittstellen 13 und 23 in praktischen Anwendungsfällen deutlich umfangsreicher ausgestaltet sein können und beispielsweise zusätzliche Feldbusse und/oder weitere Ein-/Ausgabekanäle vorgesehen sein können.

Bei bisherigen HIL-Testlösungen musste ein Simulationswerkzeug mit vergleichsweise hohem Adaptionsaufwand, wie bereits einleitend beschrieben, an die Prozessschnittstellen 13 und 23 angekoppelt werden. Dieser Aufwand wird nun deutlich reduziert, indem in den speicherprogrammierbaren Steuerungen 11 und/oder 21 beispielsweise beim HIL-Test Programme zur Simulation des Anlagenverhaltens ablaufen. Prozesssignale, die beim realen Betrieb zur Übertragung über die Prozessschnittstelle 13 vorgesehen sind, werden bei der Simulation der automatisierten industriellen Anlage zwischen Automatisierungsprogramm und Simulationsprogramm übertragen, welche dabei in der speicherprogrammierbaren Steuerung 11 ablaufen. Die dazu in der speicherprogrammierbaren Steuerung 11 hinterlegten Teilmodelle der Anlage entsprechen dem jeweiligen Teilbereich der Anlage, zu dessen Automatisierung die speicherprogrammierbaren Steuerungen 11 dient. Für Prozesssignale, die beim realen Betrieb zur Übertragung über die Prozessschnittstelle 23 vorgesehen sind, und für die speicherprogrammierbaren Steuerung 21 gilt Entsprechendes.

In der automatisierten industriellen Anlage ist gemäß Figur 1 zusätzlich ein Simulationswerkzeug 2 vorgesehen, welches in dem gezeigten Ausführungsbeispiel an das Netzwerk 3 zur Kommunikation mit den übrigen Automatisierungsgeräten angeschlossen ist. Ähnlich einem Engineering-Werkzeug, welches üblicherweise zum Laden von Automatisierungsprogrammen in speicherprogrammierbare Steuerungen verwendet wird, dient das Simulationswerkzeug 2 zum Laden des Simulationsprogramms in die speicherprogrammierbaren Steuerungen 11 und 21 und ist dazu mit diesen über die Schnittstellen 12 bzw. 22 zur Kommunikation verbunden.

Alternativ zum gezeigten Ausführungsbeispiel können selbstverständlich andere Kommunikationsschnittstellen der speicherprogrammierbaren Steuerungen 11 und 21 dazu genutzt werden.

Weiterhin dient das Simulationswerkzeug 2 zur Erstellung von Anlagenmodellen oder Anlagenteilmodellen, die von Simulationsprogrammen zur Anlagensimulation benötigt werden. Bevor Simulationsprogramm und -modelle in die speicherprogrammierbaren Steuerungen 11 und 21 vom Simulationswerkzeug 2 heruntergeladen werden, prüft dieses, ob die dort zum Ablauf benötigten Ressourcen ausreichend vorhanden sind und ob bei zyklischer Programmbearbeitung eine ausreichende Reserve verbleibt. Sind beide Bedingungen erfüllt, können die Modelle in die Steuerungen 11 und/oder 21 heruntergeladen werden und dort als koexistente Simulationsmodelle neben dem Automatisierungsprogramm verbleiben. Weiterhin kann die Umschaltung zwischen realem Betrieb der industriellen Anlage und einem HIL-Test gesteuert durch das Simulationswerkzeug 2 erfolgen. Bei einem HIL-Test kann eine Visualisierung der Testergebnisse mit Hilfe des Simulationswerkzeugs 2 auf einer geeigneten Anzeigeeinheit vorgenommen werden.

Abweichend von dem dargestellten Ausführungsbeispiel ist es selbstverständlich auch möglich, die Funktionen des Simulationswerkzeugs 2 beispielsweise in dem Leitsystem 1 neben dessen Automatisierungsfunktionen zu integrieren.

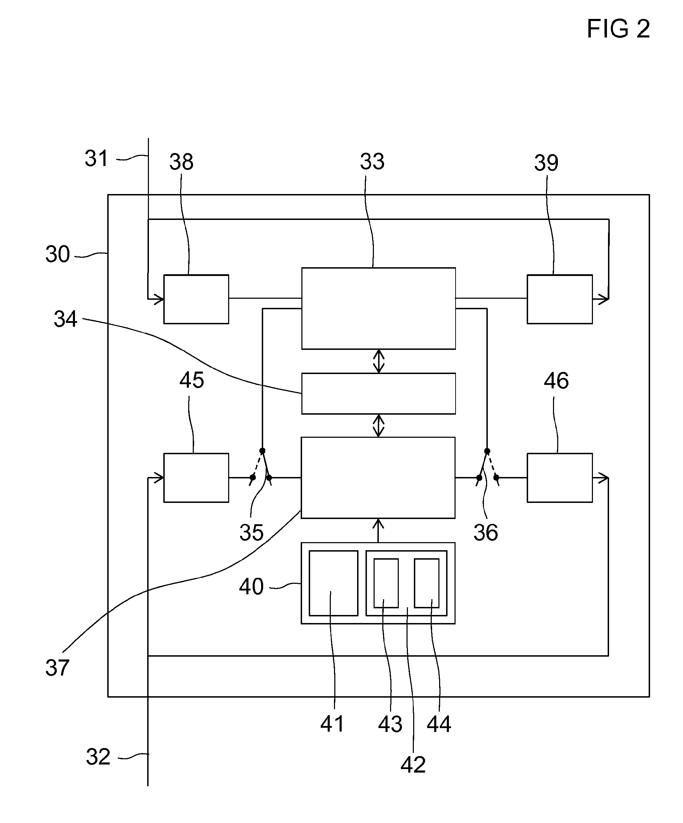

In Figur 2 ist eine speicherprogrammierbare Steuerung 30 in einem höheren Detaillierungsgrad dargestellt, welche den speicherprogrammierbaren Steuerungen 11 oder 21 aus Figur 1 entspricht. Analog zu diesen besitzt die Steuerung 30 eine Schnittstelle 31 zur Verbindung beispielsweise mit einem Leitsystem sowie einer Prozessschnittstelle 32 zur Verbindung mit in Figur 2 nicht dargestellten prozessnahen Komponenten. Ein Automatisierungsprogramm 33, welches ein Prozessabbild 34 führt, ist zur Steuerung des auf der zu automatisierenden Anlage oder Teilanlage laufenden Prozesses vorgesehen. Bei der Durchführung einer Simulation befinden sich Signalflussschalter 35 und 36 in einer ersten Stellung, in welcher sie Prozesssignale, die im realen Betrieb zur Übertragung über die Prozessschnittstelle 32 vorgesehen sind, zwischen dem Automatisierungsprogramm 33 und einem Simulationsprogramm 37 übertragen. Alternativ oder zusätzlich kann das Simulationsprogramm 37 auf das Prozessabbild 34 zum Datenaustausch zugreifen. Zur Kommunikation mit einem Leitsystem oder weiteren speicherprogrammierbaren Steuerungen sind ein Eingangskanaltreiber 38 sowie ein Ausgangskanaltreiber 39 vorgesehen, bei welchen es sich beispielsweise um Profinet- oder Industrial-Ethernet-Kanaltreiber handeln kann. Ähnlich wie beim Bedienen und Beobachten durch ein Leitsystem können die simulierten Prozesssignale, welche den im Prozessabbild 34 hinterlegten Datenwerten von Prozessvariablen entsprechen, veranlasst durch über die Schnittstelle 31 gesendete Telegramme eines angeschlossenen Simulationswerkzeugs bei der Simulation geschrieben oder zur Visualisierung gelesen werden. Für die Simulation des Anlagenverhaltens nutzt das Simulationsprogramm 37 ein Anlagenmodell 40, das selbstverständlich in mehrere Teilmodelle untergliedert sein kann und, da es auch im realen Betrieb der Anlage auf der Steuerung 30 verbleibt, als koexistentes Simulationsmodell bezeichnet werden kann. Das Modell 40 besitzt einen Visualisierungsteil 41, der beispielsweise zur graphischen Ausgabe eines Modellzustands auf einem Simulationswerkzeug dienen kann, sowie eine Verhaltensbeschreibung 42, zum Beispiel in Form einer Anhäufung von mathematischen Formeln zur Beschreibung des Verhaltens des durch die Steuerung 30 zu automatisierenden Anlagenteils. Die Verhaltensbeschreibung 42 umfasst ein Laufzeitmodell 43, welches einer Umsetzung der Verhaltensbeschreibung eines Anlagenteils mit den Projektierungssprachen der Steuerung 30 entspricht, und einen dem Modell zugehörigen Ressourcenbedarf 44, welcher zum Beispiel die Größe des benötigten Speicherplatzes und den Laufzeitbedarf des koexistenten Simulationsmodells auf der Steuerung 30 sowie eventuell weitere Parameter beinhaltet.

Da die Syntax von Verhaltensbeschreibungen von Simulationsmodellen, zum Beispiel bei dem bekannten Simulationswerkzeug SIMIT CTE, in hohem Maße ähnlich ist zu Projektierungssprachen von Steuerungen, zum Beispiel SCL, ist eine automatische Generierung von Laufzeitmodellen 43 aus eventuell bereits vorhandenen Verhaltensbeschreibungen zum Beispiel für das bekannte Simulationswerkzeug SIMIT möglich. Da oft bereits Simulationsmodelle der Anlage schon lange existieren, bevor mit der Projektierung der Automatisierungssoftware begonnen wird, kann die Erstellung eines Laufzeitmodells 43 mit einem vorteilhaft geringen Aufwand verbunden sein.

Für den realen Betrieb einer Anlage werden die Umschalter 35 und 36 in eine zweite, mit durchbrochenen Linien eingezeichnete Stellung gelegt. Die Umschaltung kann gesteuert durch ein an die Schnittstelle 31 angeschlossenes Simulationswerkzeug erfolgen. Dazu sendet das Simulationswerkzeug ein Steuertelegramm, aufgrund dessen in dem Eingangskanaltreiber 38 ein Steuerungssignal für die Signalflussschalter 35 und 36 erzeugt wird. Dieses ist in Figur 2 der Übersichtlichkeit wegen nicht dargestellt. Im realen Betrieb werden somit Prozesssignale zwischen einer durch die Steuerung 30 automatisierten Anlage oder eines Anlagenteils und dem Automatisierungsprogramm 33 über die Prozessschnittstelle 32 ausgetauscht. Dazu sind ein Eingangskanaltreiber 45 und ein Ausgangskanaltreiber 46 vorgesehen, die beispielsweise als Profibus-Kanaltreiber ausgebildet sein können.

Im Folgenden werden die durch die Erfindung erzielten Vorteile, die anhand des in den Figuren 1 und 2 gezeigten Ausführungsbeispiels deutlich werden, kurz zusammengefasst:
- Schnelle Umschaltung zwischen HIL-Test und realem Betrieb.
- Enge Kopplung koexistenter Simulationsmodelle an den Lebenszyklus einer Anlage, so dass Änderungen des Automatisierungsprogramms, die zu Inkonsistenzen mit den Simulationsmodellen führen können, beim Übersetzen der gesamten, auf eine Steuerung heruntergeladenen Software entdeckt werden.
- Minimaler Einfluss des Simulationsprogramms auf das Verhalten des Automatisierungsprogramms bei der Durchführung einer Simulation, da insbesondere das Zyklusverhalten des Automatisierungsprogramms nicht beeinflusst wird. Im Vergleich dazu hatte die Verwendung der eingangs beschriebenen Anschaltungen für ein gesondertes Simulationswerkzeug wie beispielsweise des Simulationswerkzeugs SIMIT einen größeren Einfluss.
- Einsparung zusätzlicher Hardware und Konfigurationszeit durch Entfallen der Anschaltungen für Prozessschnittstellen, die bisher beispielsweise für das Simulationswerkzeugs SIMIT erforderlich waren.
- Da die koexistenten Simulationsmodelle im Automatisierungsprojekt integriert sind, ist ein Hardwaretausch ohne Probleme möglich. Beim Austausch werden nämlich sowohl das Automatisierungsprogramm als auch das Simulationsprogramm mit dem Anlagenmodell auf die neue Steuerung kopiert.
- Bessere Ressourcennutzung, da neben dem Automatisierungsprogramm auch das Simulationsprogramm auf der vorhandenen Steuerung abläuft und lediglich dort freie Reserven für die Simulation genutzt werden.
- Eine integrierte Simulation im Automatisierungsprojekt unterstützt die Migration von bestehenden Anlagen auf modernere Leittechnik, da auch dort die ursprünglichen Simulationsmodelle ausgeführt werden können.
- Simulationsprogramme sind durch den Ablauf auf der Steuerung bei Einhaltung der Zykluszeit immer echtzeitfähig.
- Zur Generierung von koexistenten Simulationsmodellen können vielfältige, bereits vorhandene Modelle genutzt werden. Dies können von bekannten Simulationswerkzeugen, beispielsweise SIMIT, verwendete Modelle sowie zu Automatisierungslösungen passende Simulationsmodelle sein, die in Bibliotheken von Herstellern von Automatisierungskomponenten mitgeliefert werden.
- Koexistente Simulationsmodelle sind effizient für emulierte Steuerungslösungen, wie sie zum Beispiel im Kontext einer Systemsimulation oder einer Teilinbetriebnahme oftmals genutzt werden.

## Patentansprüche

1. Verfahren zur Simulation einer automatisierten industriellen Anlage mit zumindest einer speicherprogrammierbaren Steuerung (11, 21, 30), in welcher ein Automatisierungsprogramm (33) abläuft, das zur Steuerung eines auf der Anlage ablaufenden Prozesses (18, 28) vorgesehen ist, **dadurch gekennzeichnet, dass** in der speicherprogrammierbaren Steuerung (11, 21, 30) zudem ein Simulationsprogramm (37) zur Simulation des Anlagenverhaltens anhand eines in der speicherprogrammierbaren Steuerung (11, 21, 30) hinterlegten Anlagenmodells oder Anlagenteilmodells (40) abläuft und dass Prozesssignale, die beim realen Betrieb zur Übertragung über eine Prozessschnittstelle (13, 23, 32) zwischen Automatisierungsprogramm (33) und Anlage vorgesehen sind, bei der Simulation der automatisierten industriellen Anlage zwischen Automatisierungsprogramm (33) und Simulationsprogramm (37) übertragen werden.

2. Verfahren nach Anspruch 1, **dadurch gekennzeichnet, dass** das Anlagenmodell oder Anlagenteilmodell (40) eine Verhaltensbeschreibung (42) mit einem Laufzeitmodell (43) und einem Ressourcenbedarf (44) des Laufzeitmodells (43) umfasst.

3. Speicherprogrammierbare Steuerung zur Durchführung eines Simulationsverfahrens nach Anspruch 1 oder 2, **dadurch gekennzeichnet, dass** die speicherprogrammierbare Steuerung (11, 21, 30) eine Schnittstelle (12, 22, 31) aufweist, mit welcher ein Simulationswerkzeug (2) mit der speicherprogrammierbaren Steuerung (11, 21, 30) zum Laden des Simulationsprogramms (37) in die speicherprogrammierbare Steuerung (11, 21, 30) verbindbar ist und dass die speicherprogrammierbare Steuerung (11, 21, 30) zumindest einen Umschalter (35, 36) für einen Signalfluss aufweist derart, dass Prozesssignale, die beim realen Betrieb zur Übertragung über die Prozessschnittstelle (13, 23, 32) zwischen Automatisierungsprogramm (33) und Anlage vorgesehen sind, bei der Simulation der automatisierten industriellen Anlage zwischen Automatisierungsprogramm (33) und Simulationsprogramm (37) übertragen werden.

4. Simulationswerkzeug zur Durchführung eines Simulationsverfahrens nach Anspruch 1 oder 2, **dadurch gekennzeichnet, dass** das Simulationswerkzeug (2) mittels einer Schnittstelle (12, 22, 31) zum Laden des Simulationsprogramms (37) in die speicherprogrammierbare Steuerung (11, 21, 30) mit der speicherprogrammierbaren Steuerung verbindbar ist und dass das Simulationswerkzeug (2) zur Steuerung der speicherprogrammierbaren Steuerung (11, 21, 30) über die Schnittstelle (12, 22, 31) eingerichtet ist, derart, dass das Simulationsverfahren nach Anspruch 1 oder 2 durchgeführt wird.

5. Computerprogramm oder Computerprogrammprodukt mit auf einem Computer lesbaren Datenträger gespeicherten Programmcodemitteln, die zur Durchführung eines Simulationsverfahrens nach Anspruch 1 oder 2 vorgesehen und bestimmt sind, wenn das Programm auf einer speicherprogrammierbaren Steuerung gemäß Anspruch 3 oder auf einem Simulationswerkzeug gemäß Anspruch 4 ausgeführt wird.
